# EUROPEAN PATENT APPLICATION

(11) **EP 4 071 670 A1**
(43) Date of publication of application: **12.10.2022**
(21) Application number: 21167631.7
(22) Date of filing: 09.04.2021
(51) Int. Cl.: G06N 3/04, G06N 3/08, H04L 29/08

(54) **TECHNICAL SYSTEM FOR A CENTRALIZED GENERATION OF A PLURALITY OF TRAINED, RETRAINED AND/OR MONITORED MACHINE LEARNING MODELS, WHEREIN THE GENERATED MACHINE LEARNING MODELS ARE EXECUTED DECENTRAL**

(71) Applicant: Siemens Aktiengesellschaft, 80333 München (DE)
(72) Inventor: The designation of the inventor has not yet been filed

(57) **Abstract**

The invention is directed to a Technical system for a centralized generation of a plurality of trained, retrained and/or monitored machine learning models to be executed decentral, comprising:
a. a communication link or a communication interface; wherein
b. the communication link or the communication interface is configured to communicate data bidirectional between a central machine learning platform with a machine learning unit and a plurality of decentral units;
c. the central machine learning platform and the plurality of decentral units; wherein
d. the central machine learning platform with the machine learning unit is connected to the communication link or the communication interface; wherein
e. the central machine learning platform is configured to train, retrain and/or monitor a respective machine learning model for each decentral unit of the plurality of decentral units based on training data, wherein the training data of the decentral unit is received from the respective decentral unit of the plurality of decentral units and/or other at least one unit; wherein
f. the central machine learning platform is configured to provide the respective trained, retrained and/or monitored machine learning model via the communication link or the communication interface for the respective decentral unit of the plurality of decentral units; wherein
g. each decentral unit of the plurality of decentral units is connected to the communication link or the communication interface; wherein
h. each decentral unit of the plurality of decentral units is configured to receive the respective trained, retrained and/or monitored machine learning model of the generated plurality of machine learning models from the central machine learning platform via the communication link or the communication interface; wherein
i. each decentral unit of the plurality of decentral units is configured to execute the received trained, retrained and/or monitored machine learning model.

Further, the invention relates to a Computer-implemented Method and a non-transitory computer-readable data storage medium.

## Description

### 1. Technical field

The present invention relates to a technical system for a centralized generation of a plurality of trained, retrained and/or monitored machine learning models, wherein the generated machine learning models are executed decentral. Further, the invention relates to a corresponding computer-implemented method and a corresponding storage medium.

### 2. Prior art

Artificial Intelligence ("AI") systems are known from the prior art. According to which, the AI systems are software programs whose behavior is learned from data instead of being explicitly programmed. The learning process is called "training" which requires plenty of data and significant computational resources. Thereby, the trained AI system solves a specific task for which it was trained, such as state estimation.

Unlike conventional software, the learned behavior of the AI systems highly depends on the data used during training. This means that the performance of an AI system will be high when the training data is a representative sample of the data on which the AI system will be applied later in the field while the performance may be low when the training and in-field data differ in their characteristics. It is common that a trained AI system performs well after training and that its performance degrades over time as in-field data increasingly differs from the original training data.

Therefore, operating AI systems in real-world distributed systems requires managing complete lifecycles including e.g. (a) continuous monitoring in order to detect performance degradation, (b) retraining when performance degradation is detected, (c) continuous collection of in-field data used for monitoring and retraining, and (d) deployment of the new versions.

Managing a complete lifecycle remains a complex and challenging task.

One reason for this is that e.g. the requirements and properties of the involved components differ significantly.

For instance, the platform core, data and training management require elastically scalable standard server infrastructure, such as cloud infrastructure (e.g. x86, 64 bit, standard Linux OS) whereas trained AI systems are deployed to and operated on resource-constrained edge devices (e.g. ARM, 32 or 64 bit, custom Linux OS).

For example, the trained AI system can be used for AI-based state estimation. The state estimation serves the purpose of stabilizing low-voltage power grids with decentralized production (e.g. photovoltaic) and new consumption patterns from e-mobility. The decentralized production and new consumption patterns cause increasing stress on the low-voltage grid (e.g. violation of mandatory voltage bands).

This stress can be addressed by using additional expensive grid sensors or by grid reinforcement. An alternative and more cost-effective approach would be to feed secondary substation measurements to an AI-based estimation of grid state at smart meter nodes in the grid and based on these estimations intelligent control of the power grid, e.g. by temporary pausing of an e-car charging session or switching of decentral generators. Therefore, scalability i.e. a fast, standardized and automated process of integrating new power grid instances to the platform, is very important since the cost requirements for a marketable solution are very challenging.

Thereby, the training of the AI-based state estimation has to consider several important aspects:
The data which is needed for the training is often only available in a central IT-system and not in the location where the field device is installed which performs the state estimation. Further, the field devices in general have not sufficient computational power to process the training. Further, a continuous re-training of the AI-based state estimation is necessary since the behavior of the low voltage networks will change if new installations are added or existing installations will be removed. Further, the AI-based state estimation has to be located in the field device, since it needs to work even if the communication between the field device and the central IT-system is disturbed.

According to prior art, however, the conventional approaches are not applicable on the aforementioned exemplary use case or any other AI-based application dealing with the aforementioned aspects. Neither a pure central-based approach where the process for the AI-based stated estimation is performed in a central-based system (e.g. a cloud system) nor a distributed approach where the process is performed in the field devices is applicable.

It is therefore an objective of the invention to provide a technical system for a centralized generation of a plurality of trained, retrained and/or monitored machine learning models, wherein the generated machine learning models are executed decentral.

### 3. Summary of the invention

This problem is according to one aspect of the invention solved by a technical system for a centralized generation of a plurality of trained, retrained and/or monitored machine learning models, wherein the generated machine learning models are executed decentral, comprising:
a. A communication link or a communication interface; wherein
b. the communication link or the communication interface is configured to communicate data bidirectional between a central machine learning platform with a machine learning unit and a plurality of decentral units;
c. the central machine learning platform and the plurality of decentral units; wherein
d. the central machine learning platform with the machine learning unit is connected to the communication link or the communication interface; wherein
e. the central machine learning platform is configured to train, retrain and/or monitor a respective machine learning model for each decentral unit of the plurality of decentral units based on training data, wherein
   the training data of the decentral unit is received from the respective decentral unit of the plurality of decentral units and/or other at least one unit; wherein
f. the central machine learning platform is configured to provide the trained, retrained and/or monitored machine learning models via the communication link or the communication interface for the respective decentral units of the plurality of decentral units; wherein
g. each decentral unit of the plurality of decentral units is connected to the communication link or the communication interface; wherein
h. each decentral unit of the plurality of decentral units is configured to receive the respective trained, retrained and/or monitored machine learning model of the generated plurality of machine learning models from the central machine learning platform via the communication link or the communication interface; wherein
i. each decentral unit of the plurality of decentral units is configured to execute the received trained, retrained and/or monitored machine learning model.

Accordingly, the invention is directed to a technical system for a centralized generation of a plurality of trained, retrained and/or monitored machine learning models. In other words, the training, retraining and/or monitoring steps are performed on the central machine learning platform. This results in respective generated trained, retrained and/or monitored machine learning models. Preferably, the central machine learning platform is a cloud based platform or is installed on user's premise.

The resulting generated trained, retrained and/or monitored machine learning models are not executed directly on the central machine learning platform, but decentral. Hence, the machine learning models are transmitted to and executed on the decentral units. Preferably, the decentral units are designed as edge devices.

The central machine learning platform comprises one or more units, including the machine learning unit for training, retraining and/or monitoring a respective machine learning model for each decentral unit of the plurality of decentral units based on training data. Additionally, the central machine learning platform can comprise e.g. storage units. Thereby, machine learning, the machine learning model and the corresponding concepts such as training, retraining and/or monitoring can be interpreted in the common sense.

The training data is provided by the decentral units and/or other units. The training data can be received from smart meters or other IT systems as exemplary other units. The training data can be provided by other IT-systems which provide the data via a machine to machine communication to the central machine learning platform. The training data can comprise measuring data points. The measuring data points can be derived from secondary substations and/or smart meters under a substation, wherein the secondary substations are located near the decentral units and the measuring data points are provided for the central machine learning platform by the decentral units. The measuring data points can comprise electrical measurements like current, voltage, active and reactive power or any other measured value or parameter of interest e.g. in context of a power grid or an electricity network.

In other words, the machine learning model, such as AI model, is applied on input data for state estimation. Hence, the state of the power grid or the electricity network is determined in an efficient and reliable manner using machine learning.

Thereby, for each decentral unit of the plurality of decentral units a corresponding trained, retrained and/or monitored machine learning model is generated, according to which N decentral units and N models.

The decentral units each receive and execute their respective trained, retrained and/or monitored machine learning model.

The aforementioned units e.g. decentral units may be realized as any devices, or any means, for computing, in particular for executing a software, an app, or an algorithm. The decentral units can be realized as any physical computing devices, means or cloud systems for executing a software, an app, or an algorithm. For example, the unit may consist of or comprise a central processing unit (CPU) and/or a memory operatively connected to the CPU. The unit may also comprise an array of CPUs, an array of graphical processing units (GPUs), at least one application-specific integrated circuit (ASIC), at least one field-programmable gate array, or any combination of the foregoing. The unit may comprise at least one module which in turn may comprise software and/or hardware. Some, or even all, modules of the unit may be implemented by a cloud computing platform.

The central machine learning platform and the decentral units are connected to the communication bus or link for communication of data, according to which bidirectional data exchange or transfer. Accordingly, the machine learning model and associated data is transmitted via the communication bus or link. Additionally, any other data can be transmitted as well. The data can e.g. comprise the machine learning model and/or the container etc. This allows for efficient data transmission and secure data traffic.

Hence, the present invention provides a hybrid solution with central monitoring, training and/or retraining, but decentral execution of the monitored, trained and/or retrained machine learning model, such as AI system or AI model. This hybrid approach integrates the advantages of both central and decentral prior art approaches. Contrary to prior art, the aforementioned complex complete lifecycle essential for operating AI systems in real-world distributed systems can be managed in an efficient and reliable manner using the technical system.

In one aspect the machine learning model is an Artificial Intelligence model, preferably an Artificial Neural Network. Accordingly, the machine learning model is an Artificial Intelligence model. Alternatively, any other machine learning model can be used depending on the underlying user requirement, the use case such as the aforementioned power grid, the application case and/or any other condition.

The present invention allows for efficient, reliable and low-cost usage of machine learning systems, preferably the AI systems on the resource-constrained edge devices at large scale including full lifecycle management of the AI systems. The full lifecycle management comprises e.g. monitoring, training, retraining, deployment aspects.

The advantage of the method according to the invention is that the method is independent from the application for which the machine learning models are trained. The machine learning model can be used for state estimation or other applications, which require a central training and a distributed execution of individual AI systems on the edge devices.

The method according to the invention is also device-agnostic and is advantageously applicable on diverse edge devices with e.g. different hardware and basic software stacks and provided by different vendors, which enables scalability of the solution.

In another aspect the communication link is a bus system, preferably a shared message bus. Accordingly, the communication link is a bus, such as MQTT. Alternatively, the communication interface can be used. The advantage is that the communication link or interface can be flexibly and efficiently selected and adapted depending on the underlying technical system. Alternatively, communication protocols used in energy automation, like IEC 61850, can be used.

In another aspect the decentral unit is an edge device. Accordingly, the decentral unit is designed as edge device. Alternatively, any other computing devices can be used, which can be connected to the communication link or communication interface. For example, the plurality of decentral units can comprise distinct decentral units, including edge devices and other computing units.

In another aspect the training data comprises measuring data points.

In another aspect the central machine learning platform is further configured to deploy the generated trained, retrained and/or monitored machine learning models on the respective decentral units of the plurality of decentral unit in step f.

In another aspect the central machine learning platform is further configured to
initiate a build process of a respective container for each decentral unit of the plurality of decentral units comprising the respective trained, retrained and/or monitored machine learning model;
notifying the respective decentral unit of the plurality of decentral units about the availability of the respective built container; and/or
transmitting the built containers from the central machine learning platform to the respective decentral units of the plurality of decentral units.

In another aspect each decentral unit of the plurality of decentral units is further configured to receive the respective container after notification of availability from the central machine learning platform via the communication link or communication interface in step h.

Accordingly, the generated trained, retrained and/or monitored machine learning models can be deployed on the respective decentral units. Therefore, a container is built via the build process for each machine learning model and hence for each decentral unit. In other words, the machine learning models are packaged into standardized units. Accordingly, a container deployment such as Kubernetes is performed in an efficient and reliable manner. The containers are transmitted from the central machine learning platform to the decentral units. The advantage of the containers is that they can be quickly downloaded and put into use on the decentral units.

In another aspect the central machine learning platform comprises at least one further unit, wherein the at least one further unit is configured to:
Receive data from at least one decentral unit of the plurality of decentral units, another computing unit and/or another data source via the communication link or communication interface;
Transmit data from the central machine learning platform to the at least one decentral unit, another computing unit and/or another data source via the communication link or communication interface;
Store and/or Collect data;
Synchronize data communicated between the central machine learning platform, the at least one decentral unit and/or other data source; and/or

Monitor the trained, retrained and/or monitored machine learning model.

Accordingly, as explained further above, the central machine learning platform can comprise further additional units such as e.g. non-volatile or volatile storage units.

In another aspect the monitoring comprises at least one of the sub steps:
determining the analytical performance of the machine learning model, the trained, retrained and/or previously monitored machine learning model based on a test dataset, wherein the test dataset is independent from the training data and is not used during training and/or retraining;

Evaluating the analytical performance of the machine learning model, the trained, retrained and/or previously monitored machine learning model in order to detect any performance degradation; preferably on a regular basis; and

Initiating training, retraining and/or monitoring depending on the evaluation result, preferably after detection of the performance degradation.

Accordingly, the performance of the machine learning model, the trained, retrained and/or previously monitored machine learning model can be determined and evaluated. The evaluation serves the purpose to detect any degradation in performance or deviation from the expected performance. After having identified the evaluation result, training, retraining and/or monitoring can be triggered.

For example, first a machine learning model is trained on the central machine learning platform, then executed on the respective decentral unit, evaluated after execution and then retrained after evaluation depending on the evaluation result e.g. detection of performance degradation.

According to another example, first a machine learning model is evaluated on the central machine learning platform before being deployed on the respective decentral unit. The machine learning model can be evaluated after new test data is available etc.

A further aspect of the invention is a computer-implemented method.

A further aspect of the invention is a non-transitory computer-readable data storage medium.

### 4. Short description of the drawings

In the following detailed description, presently preferred embodiments of the invention are further described with reference to the following figures:
- Fig. 1: shows a schematic representation of the technical system according to the invention.
- Fig. 2: shows a schematic representation of the technical system with its units according to an embodiment of the invention.
- Fig. 3: shows a schematic representation of the technical system with its units according to another embodiment of the invention.

### 5. Detailed description of preferred embodiments

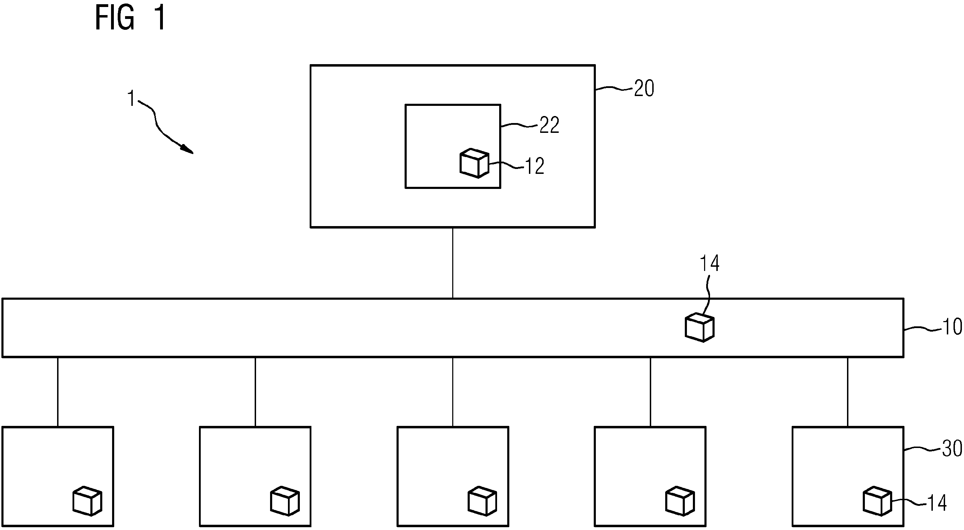

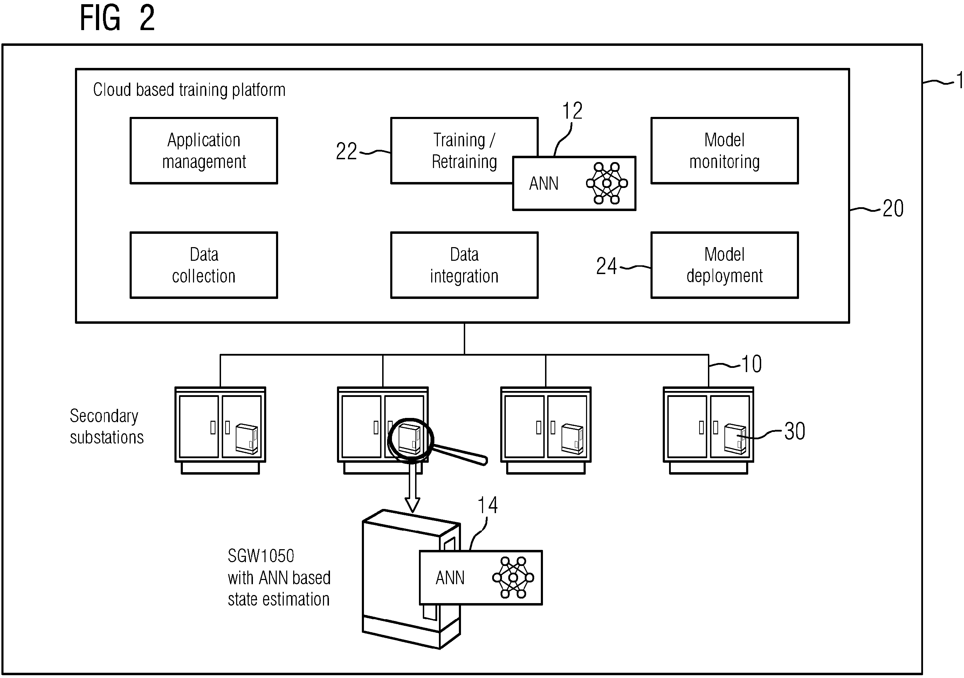

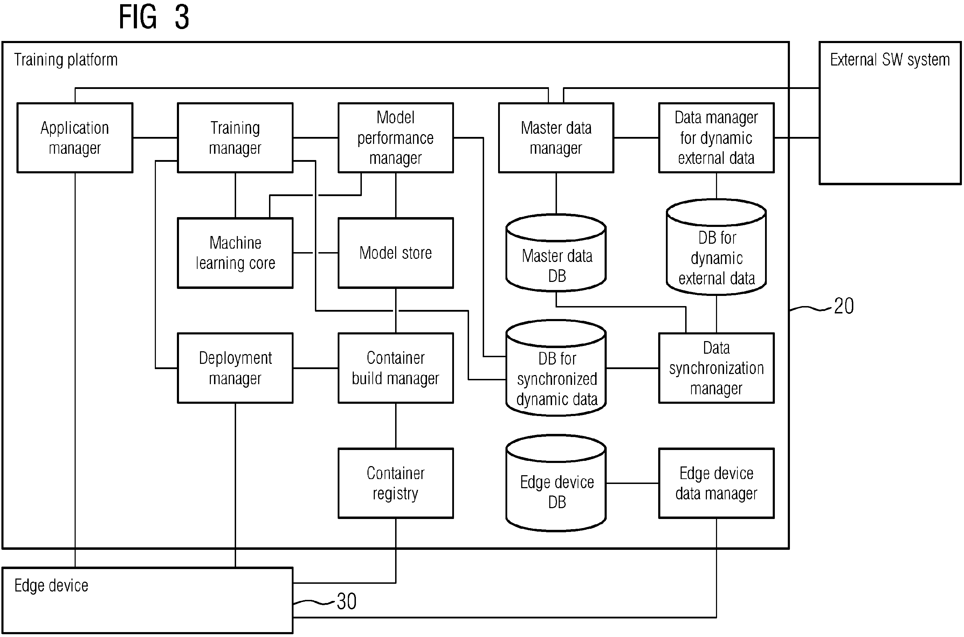

Figure 1 illustrates the technical system according to the invention. The technical system 1 comprises the central machine learning platform 20, preferably cloud based and the decentral units 30, preferably edge devices. The central machine learning platform 20 comprises the machine learning unit 22. Additionally, the central machine learning platform 20 can comprise further units 24, such as units for storage of data or processing of data. Such additional exemplary units 24 are shown in Figures 2 and 3 and explained further below.

The central machine learning platform 20 performs the training, retraining and/or monitoring of the machine learning model 12 and is connected to the communication link or the communication interface 10 such as a bus.

The decentral units 30 each execute their communicated trained, retrained and/or monitored machine learning model 14 (after training, retraining and/or monitoring by the central machine learning platform 30) and are also connected to the communication link or the communication interface 10. They e.g. receive the trained, retrained and/or monitored machine learning model 14 via the communication link or the communication interface 10.

Accordingly, in other words, the present invention is directed to a hybrid scalable lifecycle management platform that automates the entire lifecycle for a large number of AI systems that shall be deployed to resource-constrained edge devices in the field, as depicted in Figures 1 to 3.

According to an embodiment, as illustrated in Figure 2, the core platform or central machine learning platform 20 comprises a multitude of microservices that run on an elastically scalable standard server infrastructure (e.g. x86, 64 bit, standard Linux OS). The platform 20 comprises e.g. microservices for data collection and data integration etc. according to Figure 2.

The trained AI systems 14 such as Artificial Neural Network (ANN) run on resource-constrained edge devices 30 (e.g. ARM, 32 bit, 64 bit, custom Linux OS). Thereby, the edge devices 30 can be installed on secondary substations, as shown in Figure 2. SGW1050 is the name of exemplary edge devices..

A central message bus (e.g. using MQTT) 10, to which the core platform 20 and the edge devices 30 are connected, is used for communication such as data upload from the edge devices 30 to the core platform 20 and event messages for updating the deployments of AI systems to edge devices 30.

Figure 3 shows a schematic representation of the technical system 1 with the central machine learning platform 20 and the edge devices 30 in more detail, especially the platform 20 with a plurality of distinct units according to another embodiment of the invention. The platform 20 comprises the following units, according to this embodiment:

### • Master data manager:

The master data manager requests or receives the master data about the available measurements or data points (equally referred to as measuring data points) at edge devices 30 and from the other software systems via the shared message bus or other communication interfaces (e.g. REST APIs) 10, integrates them into a consistent master data model in a common namespace and inserts them into the master database.

### • Master database:

The master database stores the integrated master data about e.g. the edge devices 30, their location, their installation status, any available measurements or data points at assets (e.g. secondary substations) near the edge devices 30, available measurements or data points (e.g. measurements from smart meters under a substation) from other software systems (e.g. a meter data management system) and/or services (e.g. state estimation) which are e.g. activated at the edge devices 30.

### • Edge device data manager:

The edge device data manager receives the dynamic data from the edge devices on the shared message bus and inserts them into the edge device database.

### • Edge device database:

The edge device database stores the dynamic data (e.g. timeseries data, log data, audio data, image data and/or video data) received from the edge devices.

### • Data manager for dynamic external data:

The data manager for the dynamic external data receives the dynamic data (e.g. weather data that is required for model training) from the other software systems via a machine to machine communication 10 and inserts them into the database for external data.

### • Database for dynamic external data:

The database for dynamic external data stores the dynamic external data received from the other software systems.

### • Data synchronization manager:

The dynamic data provided by the field devices and the external software systems are often not synchronized since not all devices and/or software systems have an exact time and thus will not stamp the data with the exact time.

In addition, the time series data collected in the edge devices and in other software systems often have different sampling rates.

Therefore, the data synchronization manager is required in these cases which is configured to synchronize the dynamic data from the edge devices and the other software systems to a common time base and sampling rate. The synchronized data is stored in the database for synchronized dynamic data.

### • Database for synchronized dynamic data:

The database for synchronized dynamic data stores the dynamic data synchronized by the data synchronization manager

### • Application manager:

The application manager provides the public interfaces for managing the core platform e.g. activates AI services like the power grid state estimation on edge devices.

### • Training manager:

The training manager orchestrates the training process of an AI system for a specific edge device with the associated data. It extracts a relevant subset of the available data, determines the space of hyperparameters to explore for training the AI system, schedules training jobs on appropriate compute infrastructure e.g. in the cloud, and stores the best performing AI system among the set of explored possibilities in the model store.

It also initiates the performance evaluation of a trained AI system on test data that were held out during the training process in order to estimate the performance of the AI system when operated in the field.

### • Machine learning core:

The machine learning core defines the AI system to be trained and operated in the field. The core is configured for data preprocessing, feature selection, feature engineering, training the AI system, evaluation of the trained AI system and/or exporting a trained AI system as an artifact to be stored in the model store.

### • Model store:

The model store is a storage system for exported AI system artifacts i.e. AI models and their metadata (e.g. performance on test data, used training dataset, etc.). It supports adding new artifacts and retrieving existing artifacts based on a unique identifier of the artifact.

### • Model performance monitor:

The model performance monitor uses the machine learning core (software library) and an exported AI system artifact from the model store in order to determine the performance of the AI system on a test dataset that was not used in the training process.

The performance of a deployed AI system is evaluated on a regular basis in order to detect performance degradation. The results of each performance evaluation are stored in the master data DB.

### • Deployment manager:

The deployment manager initiates the build process of a container that contains a self-contained runtime environment of a trained AI systems ready for execution on an edge device.

It also initiates the deployment of the container with the AI system either by pushing the AI system to the edge device or by notifying the edge device about the availability of the new container so that the edge device can retrieve the container.

### • Container build manager:

The container build manager builds a self-contained runtime environment for a trained AI system and stores it in a container registry.

### • Container registry:

The container registry stores the containers with the self-contained runtime environment for a trained AI system.

### Reference signs

- 1: Technical system
- 10: Communication link or Communication interface
- 12: Machine learning model (before Training, Retraining and/or Monitoring)
- 14: Trained, retrained and/or monitored machine learning model (after Training, Retraining and/or Monitoring)
- 20: Central machine learning platform
- 22: Machine learning unit
- 24: Additional unit
- 30: Decentral unit

## Claims

1. A Technical system (1) for a centralized generation of a plurality of trained, retrained and/or monitored machine learning models (12), wherein
the generated machine learning models (12) are executed decentral, comprising:
a. A communication link or a communication interface (10); wherein
b. the communication link or the communication interface (10) is configured to communicate data bidirectional between a central machine learning platform (20) with a machine learning unit (22) and a plurality of decentral units (30);
c. the central machine learning platform (20) and the plurality of decentral units (30); wherein
d. the central machine learning platform (20) with the machine learning unit (22) is connected to the communication link or the communication interface (10); wherein
e. the central machine learning platform (20) is configured to train, retrain and/or monitor a respective machine learning model (12) for each decentral unit (30) of the plurality of decentral units based on training data, wherein
the training data of the decentral unit (30) is received from the respective decentral unit (30) of the plurality of decentral units and/or other at least one unit; wherein
f. the central machine learning platform (20) is configured to provide the trained, retrained and/or monitored machine learning models (14) via the communication link or the communication interface (10) for the respective decentral units (30) of the plurality of decentral units; wherein
g. each decentral unit (30) of the plurality of decentral units is connected to the communication link or the communication interface (10); wherein
h. each decentral unit (30) of the plurality of decentral units is configured to receive the respective trained, retrained and/or monitored machine learning model (14) of the generated plurality of machine learning models from the central machine learning platform (20) via the communication link or the communication interface (10); wherein
i. each decentral unit (30) of the plurality of decentral units is configured to execute the received trained, retrained and/or monitored machine learning model (14).

2. The Technical system (1) according to claim 1, wherein the machine learning model (12, 14) is an Artificial Intelligence model, preferably an Artificial Neural Network.

3. The Technical system (1) according to claim 1 or claim 2, wherein the communication link (10) is a bus system, preferably a shared message bus.

4. The Technical system (1) according to any of the preceding claims, wherein the decentral unit (30) is an edge device.

5. The Technical system (1) according to any of the preceding claims, wherein the training data (30) comprises measuring data points.

6. The technical system (1) according to any of the preceding claims, wherein the central machine learning platform (20) is further configured to deploy the generated trained, retrained and/or monitored machine learning models (14) on the respective decentral units (30) of the plurality of decentral units in step f.

7. The technical system according (1) to claim 6, wherein the central machine learning platform (20) is further configured to
initiate a build process of a respective container for each decentral unit (30) of the plurality of decentral units comprising the respective trained, retrained and/or monitored machine learning model (14);
notifying the respective decentral unit (30) of the plurality of decentral units about the availability of the respective built container; and/or
transmitting the built containers from the central machine learning platform (20) to the respective decentral units (30) of the plurality of decentral units.

8. The technical system (1) according to claim 7, wherein each decentral unit (30) of the plurality of decentral units is further configured to receive the respective container after notification of availability from the central machine learning platform (20) via the communication link or communication interface (10) in step h.

9. The Technical system (1) according any of the preceding claims, wherein the central machine learning platform (20) comprises at least one further unit (24), wherein the at least one further unit (24) is configured to:
Receive data from at least one decentral unit (30) of the plurality of decentral units, another computing unit and/or another data source via the communication link or communication interface (10);
Transmit data from the central machine learning platform (20) to the at least one decentral unit (30), another computing unit and/or another data source via the communication link or communication interface (10);
Store and/or Collect data;
Synchronize data communicated between the central machine learning platform (20), the at least one decentral unit (30) and/or other data source; and/or
Monitor the trained, retrained and/or monitored machine learning model (14).

10. Technical system according to any of the preceding claims, wherein monitoring comprises at least one of the sub steps:
determining the analytical performance of the machine learning model (12), the trained, retrained and/or previously monitored machine learning model (14) based on a test dataset, wherein the test dataset is independent from the training data and is not used during training and/or retraining;
Evaluating the analytical performance of the machine learning model (12), the trained, retrained and/or previously monitored machine learning model (14) in order to detect any performance degradation; preferably on a regular basis; and
Initiating training, retraining and/or monitoring depending on the evaluation result, preferably after detection of the performance degradation.

11. Computer-implemented method for a centralized generation of a plurality of trained, retrained and/or monitored machine learning models (14), wherein
the generated machine learning models (14) are executed decentral, comprising:
a. Training, retraining and/or monitoring a respective machine learning model (12) for each decentral unit (30) of a plurality of decentral units based on training data by a central machine learning platform (20) comprising a machine learning unit (22), wherein
the training data of the decentral unit (30) is received from the respective decentral unit of the plurality of decentral units and/or other at least one unit(Sl);
b. Providing the trained, retrained and/or monitored machine learning models (14) via a communication link or a communication interface (10) for the respective decentral units (30) of the plurality of decentral units by the central machine learning platform (20) (S2); wherein
c. the central machine learning platform (20) and each decentral unit (30) of the plurality of decentral units are connected to the communication link or the communication interface (10) for bidirectional communication of data (S3);
d. Receiving the respective trained, retrained and/or monitored machine learning model (14) of the generated plurality of machine learning models by each decentral unit (30) of the plurality of decentral units from the central machine learning platform (20) via the communication link or the communication interface (10) (S4); and
e. Executing the received trained, retrained and/or monitored machine learning model (14) by each decentral unit (30) of the plurality of decentral units (S5).

12. A non-transitory computer-readable data storage medium comprising executable program code configured to, when executed, perform the method according to claim 11.
